# EUROPÄISCHE PATENTSCHRIFT

(11) **EP 0 860 336 B1**
(45) Veröffentlichungstag und Bekanntmachung des Hinweises auf die Patenterteilung: **26.02.2003**
(21) Anmeldenummer: 97121700.5
(22) Anmeldetag: 10.12.1997
(51) Int. Cl.: B60S 1/52, B60S 1/38

(54) **Scheibenwischblatt, insbesondere für eine Fahrzeugscheiben-wischvorrichtung**
Wiper blade, especially for a vehicle windscreen wiper device
Balai d'essuie-glace, en particulier pour un système d'essuie-glace de véhicule

(30) Priorität: 20.02.1997 DE 19706672
(43) Veröffentlichungstag der Anmeldung: 26.08.1998
(73) Patentinhaber: Valeo Wischersysteme GmbH, 74321 Bietigheim-Bissingen (DE)
(72) Erfinder: Volker, Herrmann, 97941 Tauberbischofsheim (DE); Reinhard, Johannes, 74246 Eberstadt (DE)
(74) Vertreter: Dreiss, Fuhlendorf, Steimle & Becker

(56) Entgegenhaltungen:
- DE-A- 2 512 133
- FR-A- 2 329 481
- US-A- 5 539 951

## Beschreibung

Die Erfindung bezieht sich auf ein Scheibenwischblatt, insbesondere für eine Fahrzeugscheibenwischvorrichtung, mit den Merkmalen des Oberbegriffs des Anspruchs 1.

Aus der US-A-5 539 951 ist eine gattungsgemäße Wischvorrichtung bekannt geworden, bei der an einer der Stirnseiten der Wischleiste eine separates Endstück mit einem Düsenausgang zur Abgabe von Waschflüssigkeit angeordnet ist. Die Wischvorrichtung hat den Nachteil, daß beim Reinigungsvorgang nur unzureichend Waschflüssigkeit auf die Scheibe gefördert wird.

Aus dem DE-GM 73 30 615 ist ein Wischblatt mit einer elastischen Wischleiste bekannt, wobei die Wischleiste mit einer Wischlippe auf der zu wischenden Scheibe aufliegt und außerdem mit einem Wischarm verbunden ist, der von einer antreibbaren Wischerwelle bewegbar ist. Im Inneren des Körpers der Wischleiste ist ein längsverlaufender Kanal vorgesehen, der an einer ersten Stirnseite der Wischleiste mit einer Flüssigkeitsleitung verbunden und an der gegenüberliegenden zweiten Stirnseite der Wischleiste geschlossen ausgebildet ist. Beiderseits der Wischlippe münden mehrere mit dem Kanal verbundene Öffnungen, durch welche aus einem Flüssigkeitsvorratsbehälter über die Flüssigkeitsleitung geförderte Flüssigkeit unmittelbar seitlich neben der Wischlippe auf die zu wischende Scheibe abgegeben wird. Die Wischlippe ist dabei so gestaltet, daß die beim Betrieb des Scheibenwischers jeweils in die entgegen der Wischrichtung elastisch umgebogene Wischlippe die rückwärtigen Abgabeöffnungen verschließt, so daß die Waschflüssigkeit immer nur auf die in Wischrichtung vorn liegende Seite der Wischleiste abgegeben wird. Derartige Wischblätter haben den wesentlichen Vorteil, daß die Waschflüssigkeit sparsam und in gleichmäßiger Verteilung auf den zu wischenden Abschnitt der Scheibe aufgetragen wird. Ein entscheidender Nachteil derartiger Scheibenwischerblätter, der vermutlich eine umfassende Einführung dieser Technik verhindert hat, besteht in den zu hohen Kosten für die Fertigung der Wischleisten. Diese müssen nämlich in speziellen, komplizierten Formen in diskontinuierlicher Verfahrensweise gegossen und anschließend weiterbehandelt werden.

Aufgabe der Erfindung ist es, ein mit Mitteln zur Abgabe von Waschflüssigkeit auf die zu wischende Scheibe ausgestattetes Scheibenwischblatt gegenüber bekannten Scheibenwischblättern dieser Art kostengünstiger zu gestalten.

Erfindungsgemäß wird diese Aufgaben durch ein Scheibenwischblatt mit den Merkmalen des Anspruchs 1 gelöst. Nunmehr ist es möglich, das Scheibenwischblatt mit einer kostengünstig durch Extrudieren hergestellten, elastischen Wischleiste auszurüsten, da die Merkmalskombination des Anspruchs 1 die Verwendung einer Wischleiste ermöglicht, welche über ihre gesamte Länge einen gleichen Querschnitt aufweist. Die Funktion der Abgabe von Waschflüssigkeit direkt auf die zu wischende Scheibe wird hierbei durch jeweils mindestens einen Düsenausgang gewährleistet, welcher an einem an der ersten Stirnseite der Wischleiste angebrachten, separaten Anschlußstück bzw. an einem an der zweiten Stirnseite der Wischleiste angebrachten separaten Endstück vorgesehen ist. Der mindestens eine Düsenausgang des Anschlußstückes steht dabei mit einem das Anschlußstück durchsetzenden Verbindungskanal in Verbindung, welcher wiederum den Durchtritt von Waschflüssigkeit aus einer an das Verbindungsstück angeschlossenen Waschflüssigkeitsleitung in den Kanal der Wischleiste gewährleistet. Das an der zweiten Stirnseite der Wischleiste angebrachte separate Endstück ist so gestaltet, daß dessen mindestens ein Düsenausgang mit dem Kanal der Wischleiste in Verbindung steht. Auf diese Weise kann über die Waschflüssigkeitsleitung aus einem Vorratsbehälter zu dem Scheibenwischblatt geförderte Waschflüssigkeit bzw. Intensivreinigungsmittel oder ein Enteisungsmittel auf die zu wischende Scheibe gefördert werden.

Vorteilhafte Ausgestaltungen bzw. Weiterbildungen der Erfindung ergeben sich aus den Unteransprüche.

Von Vorteil für eine effektive Reinigungswirkung ist eine Weiterbildung der Erfindung gemäß Anspruch 2, wonach vorgesehen ist, daß der von dem mindestens einen Düsenausgang des Anschlußstückes bzw. des Endstückes abgegebene Spritzstrahl auf einen seitlich neben der Wischleiste liegenden Abschnitt der zu wischenden Scheibe gerichtet ist. Da die Düsenausgänge des Anschlußstückes und des Endstückes Bestandteil des Scheibenwischblattes sind, werden beim Betrieb der Scheibenwischvorrichtung die Düsenausgänge des Anschlußstückes und des Endstückes gemeinsam mit dem Scheibenwischblatt über die zu wischende Scheibe bewegt. Für den Fall, daß die Düsenausgänge von Anschlußstück und Endstück auf die gleiche Seite neben der Wischleiste gerichtet sind, sollte das diejenige Seite der Wischleiste sein, die bei Inbetriebsetzen der Wischvorrichtung in bezug auf die Wischbewegung vor der Wischleiste liegt.

Wenn jedoch eine noch bessere Reinigungswirkung erzielt werden soll, wird eine Weiterbildung der Erfindung gemäß Anspruch 3 empfohlen. Durch die Anordnung von jeweils zwei Düsenausgängen am Anschlußstück und am Endstück, wobei die Düsenausgänge jeweils auf einen der neben den beiden Längsseiten der Wischleiste liegenden Abschnitte der zu wischenden Scheibe gerichtet sind, erfolgt auch in der rückläufigen Wischbewegung des Scheibenwischblattes eine Benetzung der zu wischenden Scheibe auf der nunmehr vor der Wischleiste liegenden Seite des Scheibenwischblattes. Andererseits wird durch die Ausbildung von jeweils nur zwei Düsenausgängen eine einfache Konstruktion bzw. Gestaltung des Anschlußstükkes bzw. des Endstückes bei kleinen Abmessungen ermöglicht. Trotzdem sind diese Düsenausgänge ausreichend, um die notwendige Benetzung der zu wischenden Scheibe mit Waschflüssigkeit für den nachfolgenden Wischvorgang zu gewährleisten.

Eine Weiterbildung der Erfindung gemäß Anspruch 4 ist im wesentlichen darauf gerichtet, daß an dem Scheibenwischblatt eine Wischleiste mit zwei in einem Abstand nebeneinander angeordneten Wischlippen zum Einsatz kommt. Wenn in diesem Zusammenhang ein besonders sparsamer Verbrauch an Waschflüssigkeit angestrebt wird, wird eine Gestaltungsvariante empfohlen, wonach die von den Düsenausgängen des Anschlußstükkes und des Endstückes abgegebenen Spritzstrahlen zwischen die beiden Wischlippen gerichtet sind.

Eine Weiterbildung gemäß Anspruch 5 bietet den Vorteil, daß aufgrund der in ihrer Richtung veränderbaren Düsenöffnungen der Düsenausgänge von Anschlußstück und Endstück eine Justierung der Richtung der abgegebenen Spritzstrahlen möglich ist. Damit kann in Abhängigkeit von den überwiegend vorherrschenden Wischbedingungen eine den Erfordernissen entsprechende optimale Justierung der Richtungen der abgegebenen Spritzstrahlen erfolgen. Die Richtungsveränderbarkeit der Düsenöffnung wird beispielsweise durch die Verwendung einer an sich bekannten, verdrehbaren Spritzkugel an der Ausmündung der Düsenausgänge erreicht. Genauso gut wäre es möglich, an sich bekannte, verstellbare Gummilippendüsen an den Ausmündungen der Düsenausgänge anzuordnen.

Eine Weiterbildung der Erfindung gemäß Anspruch 6 ermöglicht eine einfache Montage der als separate Einzelteile hergestellten Anschlußstücke und Endstücke an den Scheibenwischblättern. Dadurch, daß das Anschlußstück und das Endstück jeweils mit einem von in Scheibenwaschanlagen verwendeten Waschpumpen oder Verteilerstücken oder Waschdüsen bekannten und in den noch folgenden Ausführungsbeispielen gezeigten Anschlußstutzen ausgestattet sind, besteht die Möglichkeit, unter Ausnutzung der vorhandenen Elastizität der Wischleiste eine kraftschlüssige und/oder formschlüssige Arretierung des Anschlußstückes bzw. des Endstückes an der Wischleiste zu erreichen. Dazu wird der Anschlußstutzen von der betreffenden Stirnseite der Wischleiste her längs in den Kanal der Wischleiste eingeschoben. Dabei wird der Kanal der Wischleiste aufgrund der zumindest örtlich größeren Querschnittsabmessungen der Anschlußstutzen zumindest vorübergehend aufgeweitet. Die elastischen Rückstellkräfte des Materiales der Wischleiste sorgen dann für eine ausreichende Arretierung des Anschlußstückes bzw. des Endstückes an der Wischleiste.

Um eine ebenso einfache Verbindung des Anschlußstutzens mit der Waschflüssigkeitsleitung herzustellen, wird eine Weiterbildung der Erfindung gemäß Anspruch 7 empfohlen. Dementsprechend besitzt das Anschlußstück einen in an sich bekannter Weise gestalteten Schlauchanschlußstutzen, auf dem ein die Waschflüssigkeitsleitung bildender bzw. zu der Waschflüssigkeitsleitung gehörender flexibler Schlauch aufgesteckt ist. Durch die elastischen Rückstellkräfte dieser Waschflüssigkeitsleitung ist somit in an sich bekannter Weise eine flüssigkeitsdichte Verbindung zwischen dem Anschlußstück und der Waschflüssigkeitsleitung hergestellt.

Bei Verwendung von extrudierten Wischleisten, das heißt Wischleisten mit durchgehend gleichem Querschnitt, müssen besondere Vorkehrungen getroffen werden, um entweder eine mittig in einem umfangsseitig geschlossenen, in Längsrichtung durchgehenden Aufnahmekanal angeordnete Federschiene oder zwei in seitlichen, randoffenen Nuten der Wischleiste angeordnete Federschienen in Längsrichtung des Scheibenwischblattes an der Wischleiste zu halten. Hierzu ist eine Weiterbildung der Erfindung gemäß Anspruch 8 von Vorteil, welche vorsieht, daß das Anschlußstück und/oder das Endstück mit Mitteln zur Fixierung der einen bzw. der zwei Federschienen ausgestattet ist. Derartige Mittel sind an dem Anschlußstück bzw. an dem Endstück einfach herstellbar, und es entfällt die Notwendigkeit, hierfür separate Bauteile vorzusehen, welche den Montageaufwand erhöhen würden.

Bei der Verwendung derartiger Wischleisten sind außerdem spezielle Vorkehrungen zur Fixierung der mit einer oder zwei Federschienen bestückten elastischen Wischleiste in Längsrichtung an dem die Wischleiste tragenden Wischblattgestell erforderlich. Diese Vorkehrungen müssen so gestaltet sein, daß, insbesondere beim Wischen von gewölbten Scheiben, eine erforderliche Längsverschiebung der Wischleiste gegenüber dem Wischblattgestell möglich ist. Empfohlen wird hierfür eine vorteilhafte Weiterbildung gemäß Anspruch 9, welche vorsieht, daß das Anschlußstück und/oder das Endstück mit Mitteln zur Arretierung der Wischleiste in Längsrichtung an dem Wischblattgestell ausgestattet ist.

Ausführungsbeispiele der Erfindung werden nachfolgend anhand einer Zeichnung näher beschrieben. Dabei zeigen:
- Fig. 1: in schematischer Darstellung eine Windschutzscheibe eines Fahrzeuges und ein Paar Scheibenwischer zum Reinigen dieser Windschutzscheibe,
- Fig. 2: in Explosionsdarstellung erfindungswesentliche Elemente eines Scheibenwischblattes,
- Fig. 3: eine Ansicht eines Anschlußstückes aus der Richtung der Waschflüssigkeitsleitung und
- Fig. 4: in Seitenansicht ein anderes Ausführungsbeispiel eines Anschlußstückes.

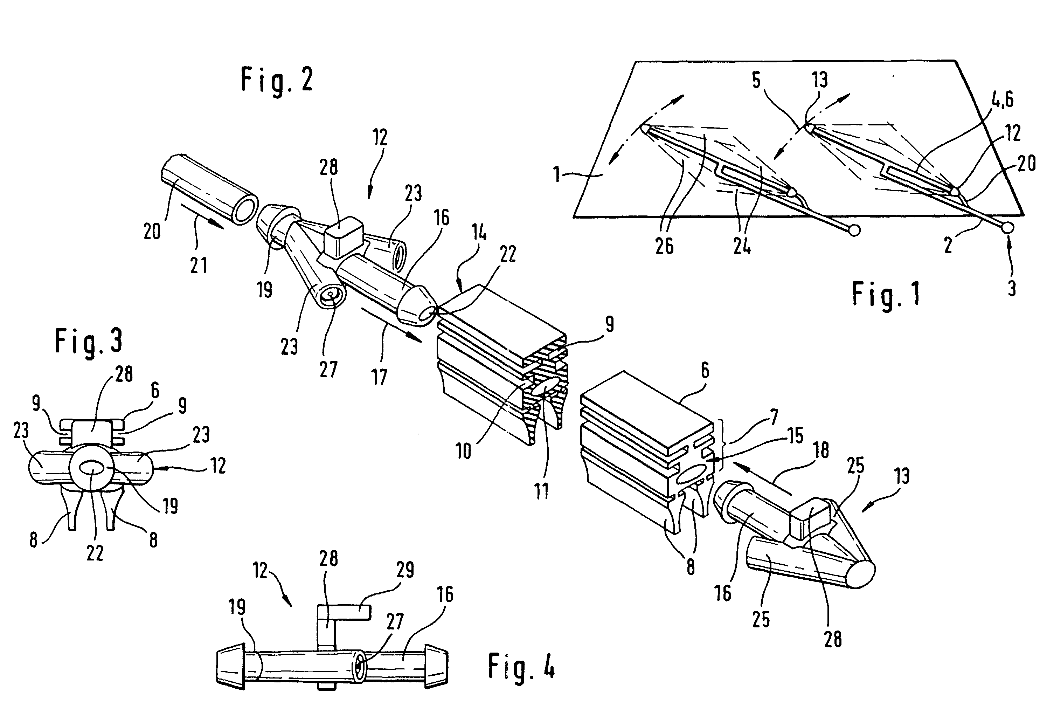

In Fig. 1 ist ein Paar von Scheibenwischern zu sehen, welche dazu bestimmt sind, die Scheibe 1 eines Fahrzeuges, welche hier eine Windschutzscheibe ist, zu reinigen. Die beiden Scheibenwischer gehören zu einer Fahrzeugscheibenwischvorrichtung und bestehen jeweils aus einem in Richtung auf die zu wischende Scheibe 1 bzw. von der Scheibe 1 hinweg schwenkbaren Wischarm 2, der an einem Ende 3 an einer nicht sichtbaren, mit pendelnder Drehbewegung antreibbaren Wischerwelle befestigt ist. An dem dem Ende 3 gegenüberliegenden Ende des Wischarmes 2 ist in an sich bekannter Weise um eine im wesentlichen parallel zur Scheibe 1 verlaufende Achse schwenkbar ein Scheibenwischblatt 4 angebracht. Die beiden Scheibenwischer sind also so gestaltet, daß sie jeweils in Richtung des Doppelpfeiles 5 im Bereich eines vorbestimmten Wischfeldes über die Scheibe 1 bewegbar sind.

Die an dem Paar von Scheibenwischern verwendeten Scheibenwischblätter 4 sind jeweils gemäß der vorliegenden Erfindung ausgebildet. Dazu ist das Scheibenwischblatt 4 beispielsweise mit einer in Fig. 2 genauer gezeigten, gummielastischen Wischleiste 6 ausgestattet. Diese Wischleiste 6 weist einen profilierten Kopfteil 7 auf, an dessen Unterseite in bekannter Weise eine Wischlippe 8 angebracht ist, die mit entsprechendem Anpreßdruck auf der Scheibe 1 aufliegt. In dem in Fig. 2 gezeigten Ausführungsbeispiel ist die Wischleiste 6 mit zwei parallelen Wischlippen 8 ausgestattet. Das hat gegenüber den allgemein gebräuchlichen Wischleisten mit nur einer Wischlippe 8 den Vorteil einer noch besseren Reinigungswirkung. Erfindungswesentlich ist, daß die Wischleiste 6 in Längsrichtung durchgehend den gleichen Querschnitt aufweist. Dadurch ist es möglich, daß eine durch ein kostengünstiges Extrusionsverfahren hergestellte Wischleiste 6 verwendbar ist.

In Fig. 2 ist zu erkennen, daß der Kopfteil 7 der Wischleiste 6 an seinen gegenüberliegenden Längsseiten jeweils mit zwei übereinanderliegenden randoffenen Nuten 9 und 10 sowie einem durchgehenden, am Umfang geschlossen ausgebildeten Kanal 11 ausgestattet ist. Die oberen Nuten 9 dienen dabei der Aufnahme von jeweils einer an sich bekannten, druckverteilenden Federschiene (in Fig. 2 nicht gezeigt), und die unteren Nuten 10 sind zum Eingriff von nicht gezeigten Krallenpaaren eines, die Wischleiste 6 haltenden Wischblattgestells bekannt, wobei die Krallenpaare jeweils von oben her den oberen Abschnitt der Kopfleiste 7 umgreifen und so die Federschienen quer zur Längsrichtung der Wischleiste 6 in den Nuten 9 halten. Die Art und die Ausgestaltung eines Wischblattgestells eines Scheibenwischblattes ist dem Fachmann bekannt und muß deshalb an dieser Stelle nicht näher erläutert werden.

Wichtig für die Erfindung sind weiterhin ein separates Anschlußstück 12 und ein separates Endstück 13, wobei das Anschlußstück 12 an einer ersten Stirnseite 14 und das Endstück 13 an einer zweiten Stirnseite 15 der Wischleiste 6 angebracht und an dieser gehalten ist. Sowohl das Anschlußstück 12 als auch das Endstück 13 besitzen jeweils einen länglichen Anschlußstutzen 16, die in Richtung des Pfeiles 17 bzw. des Pfeiles 18 in den durchgehenden Kanal 11 der Wischleiste 6 eingesteckt sind. An ihren freien Enden sind die Anschlußstutzen 16 jeweils mit einem umlaufenden, eine Quetschkante aufweisenden Wulst ausgestattet, wobei die entlang der Quetschkante umlaufende Mantellinie länger ist als die umfängliche Mantellinie des Kanales 11. Deshalb wird beim Einstecken des Anschlußstutzens 16 der Kanal 11 zumindest örtlich elastisch aufgeweitet, und aufgrund der elastischen Rückstellkräfte des Materials der Wischleiste 6 werden die Anschlußstutzen 16 formschlüssig und/oder kraftschlüssig und dabei flüssigkeitsdicht an der Wischleiste 6 arretiert. Gleichzeitig damit werden das Anschlußstück 12 und das Endstück 13 sicher an der Wischleiste 6 gehalten.

Das Anschlußstück 12 besitzt dem Anschlußstutzen 16 gegenüberliegend einen Schlauchanschlußstutzen 19, der analog dem Anschlußstutzen 16 einen Wulst mit einer umlaufenden Quetschkante besitzt. Diese Ausbildung ist dazu bestimmt, das Anschlußstück 12 mit einer in diesem Bereich als elastischer Schlauch ausgebildeten Waschflüssigkeitsleitung 20 zu verbinden. Dazu ist die Waschflüssigkeitsleitung 20 unter elastischer Verformung in Richtung des Pfeiles 21 auf den Anschlußstutzen 19 aufgeschoben, und durch die elastischen Rückstellkräfte der Waschflüssigkeitsleitung 20 in Verbindung mit dem, die Quetschkante aufweisenden Wulst ist die Waschflüssigkeitsleitung 20 sicher und flüssigkeitsdicht auf dem Anschlußstutzen 19 arretiert. Das Anschlußstück 12 weist einen durchgehenden Verbindungskanal 22 auf, der den Durchtritt von Waschflüssigkeit oder dergleichen flüssigen Medien zur Anwendung auf der Scheibe 1 des Fahrzeuges ermöglicht, welche aus einem entsprechenden Vorratsbehälter durch die Waschflüssigkeitsleitung 20 in den Kanal 11 der Wischleiste bzw. in die zwei mit dem Verbindungskanal 22 in Verbindung stehenden Düsenausgänge 23 des Anschlußstückes 12 gefördert werden soll. Die Düsenausgänge 23 sind derartig ausgerichtet, daß die aus ihnen abgegebenen Spritzstrahlen 24 jeweils auf einen der an den gegenüberliegenden Längsseiten der Wischleisten 6 liegenden Abschnitte der zu wischenden Scheibe gerichtet sind. In analoger Weise dazu weist das Endstück 13 zwei über den Anschlußstutzen 16 mit dem Kanal 11 der Wischleiste 6 verbundene Düsenausgänge 25 auf, die so gerichtet sind, daß die aus ihnen abgegebenen Spritzstrahlen 26 ebenfalls jeweils auf einen der an den gegenüberliegenden Längsseiten der Wischleiste 6 liegenden Abschnitt der zu wischenden Scheibe 1 gerichtet sind. Da das Anschlußstück 12 und das Endstück 13 an der Wischleiste 6 befestigt sind, werden die von ihnen abgegebenen Spritzstrahlen 24,26 beim Betrieb der Fahrzeugscheibenwischervorrichtung gemeinsam mit dem Wischblatt 4 über die zu wischende Scheibe 1 bewegt.

Im Zusammenhang mit den Düsenausgängen 23 und 25 bzw. den Spritzstrahlen 24 und 26 ist noch zu erwähnen, daß gemäß einer Weiterbildung der Erfindung die an den Düsenausgängen 23 und 25 vorgesehenen Düsenöffnungen 27 so gestaltet sind, daß sie hinsichtlich der Austrittsrichtung des von ihnen abgegebenen Spritzstrahles 24,26 jeweils veränderbar bzw. justierbar sind. In einfachster Weise ist deshalb an jedem Düsenausgang 23 bzw. 25 eine an sich bekannte, verschwenkbare Spritzkugel angeordnet.

In Fig. 3 sind außerdem noch die an dem Anschlußstück 12 und an dem Endstück 13 vorgesehenen Mittel 28 erkennbar, welche gleichermaßen geeignet sind, die nicht gezeigten, in den oberen Nutzen 9 der Wischleiste 6 anzuordnenden Federschienen in ihrer Längsrichtung an der Wischleiste 6 sowie die Wischleiste 6 selbst in ihrer Längsrichtung an dem ebenfalls nicht gezeigten Wischblattgestells zu arretieren. Dazu sind in den Fig. 2 und 3 die Mittel 28 als einfache Anschläge ausgebildet, die stirnseitig mit den gegenüberliegenden Stirnseiten der Federschienen und gleichzeitig mit den gegenüberliegenden Enden des Wischblattgestells des Scheibenwischblattes 4 als Anschlag zusammenwirken. In der in Fig. 3 gezeigten Ansicht ist erkennbar, daß das als Anschlag ausgebildete Mittel 28 zumindest den innenliegenden Teil der an den gegenüberliegenden Längsseiten der Wischleiste 6 vorgesehenen Nuten 9 für die Federschienen überdeckt. In der Ausführungsart des Scheibenwischblattes gemäß Fig. 2 sind sowohl am Anschlußstück 12 als auch am Endstück 13 die Mittel 28 erforderlich, um eine Arretierung in beide entgegengesetzte Längsrichtungen zu gewährleisten. Selbstverständlich ist bei dieser Art der Arretierung durch entsprechendes Längsspiel zwischen den Mitteln 28 und den gegenüberliegenden Enden des Traggestells des Scheibenwischblatts 4 darauf zu achten, daß die für einen ordnungsgemäßen Betrieb der Fahrzeugscheibenwischvorrichtung erforderliche relative Längsverschiebung der Wischleiste 6 gegenüber dem Wischblattgestell des Scheibenwischblattes 4 gewährleistet ist.

Bei dem in Fig. 4 gezeigten Ausführungsbeispiel eines Anschlußstückes 12 weist das als Anschlag für die Federschienen und das entsprechende Ende des Wischblattgestells des Scheibenwischblattes 4 ausgebildete Mittel 28 zusätzlich ein in Längsrichtung abstehendes Mittel 29, insbesondere in Form eines Rastarmes bzw. eines Rastarmpaares, auf, welches geeignet ist, das Anschlußstück 12 an dem betreffenden Ende des Traggestells des Scheibenwischblattes 4 in der zweiten Längsrichtung zu arretieren. Bei Verwendung eines derartig ausgebildeten Anschlußstückes 12 kann auf das Mittel 28 am Endstück 13 verzichtet werden, vorausgesetzt, die erforderlichen Federschienen sind auf eine andere geeignete Art in Längsrichtung an der Wischleiste 6 bzw. am Wischblattgestell des Scheibenwischblattes 4 arretiert.

### Bezugszeichenliste

- 1: Scheibe
- 2: Wischarm
- 3: Ende
- 4: Scheibenwischblatt
- 5: Doppelpfeil
- 6: Wischleiste
- 7: Kopfteil
- 8: Wischlippe
- 9: Nut
- 10: Nut
- 11: Kanal
- 12: Anschlußstück
- 13: Endstück
- 14: Erste Stirnseite
- 15: Zweite Stirnseite
- 16: Anschlußstutzen
- 17: Pfeil
- 18: Pfeil
- 19: Schlauchanschlußstutzen
- 20: Waschflüssigkeitsleitung
- 21: Pfeil
- 22: Verbindungskanal
- 23: Düsenausgang
- 24: Spritzstrahl
- 25: Düsenausgang
- 26: Spritzstrahl
- 27: Düsenöffnung
- 28: Mittel
- 29: Mittel

## Patentansprüche

1. Scheibenwischblatt, insbesondere für eine Fahrzeugscheibenwischvorrichtung, mit einer auf der zu wischenden Scheibe (1) aufliegenden und außerdem mit einem bewegbaren Wischarm (2) verbundenen elastischen Wischleiste (6), welche eine erste Stirnseite (14) und eine zweite Stirnseite (15) sowie einen in ihrem Inneren längsverlaufenden Kanal (11) zum Transport von Waschflüssigkeit aufweist, wobei der Kanal (11) an der ersten Stirnseite (14) der Wischleiste (6) mit einer aus einem Vorratsbehälter speisbaren Waschflüssigkeitsleitung (20) verbunden ist,
wobei der Kanal (11) umfangsseitig geschlossen ist und die Wischleiste (6) vollständig längs durchdringt, und
wobei an der zweiten Stirnseite (15) der Wischleiste (6) ein separates Endstück (13) angebracht ist, welches mindestens einen mit dem Kanal (11) der Wischleiste (6) verbundenen Düsenausgang (25) zur Abgabe von Waschflüssigkeit auf die zu wischende Scheibe (1) aufweist, **dadurch gekennzeichnet,**
**daß** die Verbindung des Kanales (11) mit der Waschflüssigkeitsleitung (20) an der ersten Stirnseite (14) der Wischleiste (6) über ein separates, einen Verbindungskanal (22) aufweisendes Anschlußstück (12) hergestellt ist, welches mindestens einen mit dem Verbindungskanal (22) verbundenen Düsenausgang (23) zur Abgabe von Waschflüssigkeit auf die zu wischende Scheibe (1) aufweist.

2. Scheibenwischblatt nach Anspruch 1, **dadurch gekennzeichnet, daß** der von dem mindestens einen Düsenausgang (23 bzw. 25) des Anschlußstückes (12) bzw. des Endstückes (13) abgegebene Spritzstrahl (24 bzw. 26) auf einen seitlich neben der Wischleiste (6) liegenden zu wischenden Abschnitt der Scheibe (1) gerichtet ist, wobei der Spritzstrahl (24,26) gemeinsam mit dem Scheibenwischblatt (4) über die Scheibe (1) bewegbar ist.

3. Scheibenwischblatt nach einem der vorhergehenden Ansprüche, **dadurch gekennzeichnet, daß** das Anschlußstück (12) und das Endstück (13) jeweils zwei Düsenausgänge (25,26) haben, wobei die von den Düsenausgängen (23,25) abgegebenen Spritzstrahlen (24,26) jeweils auf einen der neben beiden Längsseiten der Wischleiste (6) liegenden zu wischenden Abschnitt der Scheibe (1) gerichtet sind.

4. Scheibenwischblatt nach Anspruch 1, **dadurch gekennzeichnet, daß** die Wischleiste (6) mit zwei in einem Abstand nebeneinander angeordneten Wischlippen (8) ausgestattet ist und daß der von dem jeweils mindestens einen Düsenausgang (23,25) des Anschlußstückes (12) und des Endstückes (13) abgegebene Spritzstrahl (24,26) zwischen die beiden Wischlippen (8) oder auf einen seitlich neben der Wischleiste (6) liegenden Abschnitt der zu wischenden Scheibe (1) gerichtet ist.

5. Scheibenwischblatt nach einem der vorhergehenden Ansprüche, **dadurch gekennzeichnet, daß** der mindestens eine Düsenausgang (23,25) des Anschlußstückes (12) und/oder des Endstückes (13) mit einer in ihrer Richtung veränderbaren Düsenöffnung (27) ausgestattet ist.

6. Scheibenwischblatt nach einem der vorhergehenden Ansprüche, **dadurch gekennzeichnet, daß** das Anschlußstück (12) und/oder das Endstück (13) jeweils einen länglichen Anschlußstutzen (16) besitzen, der in den Kanal (11) der Wischleiste (6) eingesteckt ist, und daß das Anschlußstück (12) und/oder das Endstück (13) über diesen Anschlußstutzen (16) kraftschlüssig und/oder formschlüssig an der Wischleiste (6) arretiert ist.

7. Scheibenwischblatt nach einem der vorhergehenden Ansprüche, **dadurch gekennzeichnet, daß** das Anschlußstück (12) einen Schlauchanschlußstutzen (19) besitzt, auf den ein die Waschflüssigkeitsleitung (20) bildender bzw. zu der Waschflüssigkeitsleitung (20) gehörender, flexibler Schlauch aufgesteckt ist.

8. Scheibenwischblatt nach einem der vorhergehenden Ansprüche, **dadurch gekennzeichnet, daß** das Anschlußstück (12) und/oder das Endstück (13) mit Mitteln (28) zur Fixierung einer mittig im Kopfteil (7) der Wischleiste (6) angeordneten Federschiene oder zweier in seitlichen Nuten (9) des Kopfteiles (7) der Wischleiste (6) angeordneten Federschienen in Längsrichtung des Scheibenwischblattes (4) ausgestattet ist.

9. Scheibenwischblatt nach einem der vorhergehenden Ansprüche, **dadurch gekennzeichnet, daß** das Anschlußstück (12) und/oder das Endstück (13) mit Mitteln (28,29) zur Arretierung der Wischleiste (6) in Längsrichtung an dem Traggestell des Scheibenwischblattes (4) ausgestattet ist.

## Claims

1. Wiper blade, in particular for a vehicle windscreen wiper, with an elastic wiper bar (6) which rests on the windscreen (1) to be wiped, is also connected to a movable wiper arm (2) and comprises a first end face (14) and a second end face (15) as well as a duct (11) extending lengthwise in its interior for conveying washing fluid, wherein the duct (11) on the first end face (14) of the wiper bar (6) is connected to a washing fluid line (20) feedable from a reservoir, wherein the duct (11) is peripherally closed and penetrates the entire length of the wiper bar (6) and wherein the second end face (15) of the wiper bar (6) is provided with a separate end piece (13) comprising at least one nozzle outlet (25) connected to the duct (11) of the wiper bar (6) for delivering washing fluid to the windscreen (1) to be wiped, **characterised in that** the duct (11) is connected to the washing fluid line (20) at the first end face (14) of the wiper bar (6) via a separate connecting piece (12) comprising a connecting duct (22) and at least one nozzle outlet (23), connected to the connecting duct (22), for discharging washing fluid onto the windscreen (1) to be wiped.

2. Wiper blade according to claim 1, **characterised in that** the jet (24 or 24) discharged by the at least one nozzle outlet (23 or 25) of the connecting piece (12) or of the end piece (13) is directed onto a portion of the windscreen (1) to be wiped located to the side of the wiper blade (6), the jet (24, 26) being movable over the windscreen (1) together with the wiper blade (4).

3. Wiper blade according to any of the preceding claims, **characterised in that** the connecting piece (12) and the end piece (13) have two respective nozzle outlets (25, 26), the jets (24, 26) discharged by the nozzle outlets (23, 25) each being directed onto a portion of the windscreen (1) to be wiped located next to the two longitudinal sides of the wiper blade (6).

4. Wiper blade according to claim 1, **characterised in that** the wiper bar (6) is equipped with two wiper lips (8) arranged side by side with spacing and **in that** the jet (24, 26) discharged by the respective at least one nozzle outlet (23, 25) of the connecting piece (12) and of the end piece (13) is directed between the two wiper lips (8) or onto a portion of the windscreen (1) to be wiped located to the side of the wiper bar (6).

5. Wiper blade according to any of the preceding claims, **characterised in that** the at least one nozzle outlet (23, 25) of the connecting piece (12) and/or of the end piece (13) is equipped with a nozzle opening (27) having a variable direction.

6. Wiper blade according to any of the preceding claims, **characterised in that** the connecting piece (12) and/or the end piece (13) each have an elongate connecting fitting (16) which is inserted into the duct (11) of the wiper bar (6) and **in that** the connecting piece (12) and/or the end piece (13) is locked non-positively and/or positively on the wiper bar (6) by means of this connecting fitting (16).

7. Wiper blade according to any of the preceding claims, **characterised in that** the connecting piece (12) possesses a tube connecting fitting (19) onto which a flexible tube forming the washing fluid line (20) and pertaining to the washing fluid line (20) is placed.

8. Wiper blade according to any of the preceding claims, **characterised in that** the connecting piece (12) and/or the end piece (13) is equipped with means (28) for fixing a spring rail arranged centrally in the top part (7) of the wiper bar (6) or two spring rails arranged in lateral groves (9) of the top part (7) of the wiper bar (6) in the longitudinal direction of the wiper blade (4).

9. Wiper blade according to any of the preceding claims, **characterised in that** the connecting piece (12) and/or the end piece (13) is equipped with means (28, 29) for locking the wiper bar (6) in the longitudinal direction on the supporting framework of the wiper blade (4).

## Revendications

1. Balai d'essuie-glace, en particulier pour un système essuie-glace de véhicule, composant une raclette élastique (6) reposant sur la vitre (1) à nettoyer et en outre reliée à un bras d'essuie-glace mobile (2), raclette qui présente un premier côté frontal (14), un deuxième côté frontal (15), ainsi qu'un canal (11) s'étendant longitudinalement à l'intérieur de la raclette pour le transport de liquide de lavage, le canal (11) étant relié, sur le premier côté frontal (14) de la raclette (6), à une conduite de liquide de lavage (20) pouvant être alimentée à partir d'un réservoir,
le canal (11) étant circonférentiellement fermé et traversant toute la longueur de la raclette (6), et une pièce terminale séparée (13) étant montée sur le deuxième côté frontal (15) de la raclette (6), pièce qui présente au moins une sortie de buse (25), reliée au canal (11) de la raclette (6) et destinée à délivrer du liquide de lavage sur la vitre (1) à nettoyer,
**caractérisé en ce que** la liaison du canal (11) avec la conduite de liquide de lavage (20) sur le premier côté frontal (14) de la raclette (6) est réalisée au moyen d'une pièce de raccordement séparée (12) qui présente un canal de liaison (22) et au moins une sortie de buse (23) reliée au canal de liaison (22) et destinée à délivrer du liquide de lavage sur la vitre (1) à nettoyer.

2. Balai d'essuie-glace selon la revendication 1, **caractérisé en ce que** le jet (24, 26) projeté par la au moins une sortie de buse (25,26) de la pièce de raccordement (12) ou respectivement de la pièce terminale (13) est dirigé sur une partie à nettoyer de la vitre (1) qui est située sur le côté de la raclette (6), le jet projeté (24, 26) étant déplacé sur la vitre (1) conjointement avec le balai d'essuie-glace (4).

3. Balai d'essuie-glace selon l'une quelconque des revendications précédentes, **caractérisé en ce que** la pièce de raccordement (12) et la pièce terminale (13) possèdent chacune deux sorties de buse (23, 25), les jets (24, 26) projetés par les sorties de buse (23, 25) étant respectivement dirigés sur une des parties à nettoyer de la vitre (1) situées près des deux côtés longitudinaux de la raclette (6).

4. Balai d'essuie-glace selon la revendication 1, **caractérisé en ce que** la raclette (6) est équipée de deux lèvres d'essuyage (8) juxtaposées à distance entre elles, et **en ce que** le jet (24, 26) projeté par la au moins une sortie de buse (23, 25) de la pièce de raccordement (12) et de la pièce terminale (13) est dirigé entre les deux lèvres d'essuyage (8) ou sur une partie de la vitre (1) à nettoyer qui est située sur le côté de la raclette (6).

5. Balai d'essuie-glace selon l'une quelconque des revendications précédentes, **caractérisé en ce que** la au moins une sortie de buse (23, 25) de la pièce de raccordement (12) et/ou de la pièce terminale (13) sont respectivement équipées d'une ouverture de buse (27) de direction modifiable.

6. Balai d'essuie-glace selon l'une quelconque des revendications précédentes, **caractérisé en ce que** la pièce de raccordement (12) et/ou la pièce terminale (13) possèdent respectivement un raccord oblong (16) qui est emmanché dans le canal (11) de la raclette (6), et **en ce que** la pièce de raccordement (12) et/ou la pièce terminale (13) sont respectivement bloquées sur la raclette (6) à force et/ou par complémentarité de forme au moyen de ces raccords (16).

7. Balai d'essuie-glace selon l'une quelconque des revendications précédentes, **caractérisé en ce que** la pièce de raccordement (12) possède un raccord (19) pour tuyau flexible, sur lequel est emmanché un tuyau flexible constituant ou faisant partie de la conduite de liquide de lavage (20).

8. Balai d'essuie-glace selon l'une quelconque des revendications précédentes, **caractérisé en ce que** la pièce de raccordement (12) et/ou la pièce terminale (13) sont équipées de moyens (28) pour immobiliser dans la direction longitudinale du balai d'essuie-glace (4) une lame souple disposée centralement dans la partie de tête (7) de la raclette (6) ou deux lames souples disposées dans des rainures latérales (9) de la partie de tête (7) de la raclette (6).

9. Balai d'essuie-glace selon l'une quelconque des revendications précédentes, **caractérisé en ce que** la pièce de raccordement (12) et/ou la pièce terminale (13) sont équipées de moyens (28, 29) pour bloquer la raclette (6) en direction longitudinale sur le cadre porteur du balai d'essuie-glace (4).
